# EUROPEAN PATENT APPLICATION

(11) **EP 2 506 394 A1**
(43) Date of publication of application: **03.10.2012**
(21) Application number: 10833101.8
(22) Date of filing: 16.11.2010
(51) Int. Cl.: H02J 17/00, H02J 7/00, H02M 7/5387

(54) **NON-CONTACT POWER TRANSMISSION APPARATUS**

(30) Priority: 24.11.2009 JP 2009266717
(71) Applicant: Panasonic Corporation, Osaka 571-8501 (JP)
(72) Inventor: KITAMURA, Hiroyasu, 2-1-61 Shiromi, Chuo-ku Osaka 540-6207 (JP); KADA, Kyohei, 2-1-61 Shiromi, Chuo-ku Osaka 540-6207 (JP)
(74) Representative: Appelt, Christian W.
(86) International application number: PCT/JP2010/070360
(87) International publication number: WO 2011/065254

(57) **Abstract**

A non-contact power transmission apparatus comprises a resonant circuit (10), which includes switching elements (FETs 1, 2, 3, 4) and a primary coil (L1) electrically connected to the switching elements. The resonant circuit (10) induces an alternating power, which is in accordance with the resistance value of the resonant circuit (10), in the primary coil through the switchings of the switching elements. The non-contact power transmission apparatus further comprises a secondary coil (L2) that receives, from the primary coil in a non-contact manner, the alternating power at a position that intersects with an alternating magnetic flux occurring at the primary coil. A primary side control device (13) performs ON/OFF controls of the switching elements and further changes, based on information to be conveyed to the secondary coil, the resistance value of the resonant circuit (10), thereby modulating the amplitude of the alternating power induced in the primary coil. A secondary side control device (24) demodulates, from the change in the amplitude of the alternating power received by the secondary coil, the information conveyed to the secondary coil.

## Description

### TECHNICAL FIELD

The present invention relates to a non-contact power transmission device that performs non-contact power transmission between devices through electromagnetic induction.

### BACKGROUND ART

A non-contact power transmission device that charges, in a non-contact manner, a rechargeable battery (battery) incorporated as a power supply in, for example, a portable device, such as a portable telephone or a digital camera, is known in the prior art. The device includes a primary coil and a secondary coil, which transfer charging power to the portable device and a corresponding dedicated charger. The two coils transmit alternating power is transmitted from the charger to the portable device through electromagnetic induction of the coils. The portable device converts the alternating power to direct current power and charges the rechargeable battery.

In such non-contact charging, it is desirable that authentication be performed before the charging operation to determine whether or not the charger and the portable device are in correspondence with each other in order to prevent erroneous operations. Thus, for example, in patent document 1, when transmitting alternating power from the charger to the portable device, the alternating power undergoes frequency modulation at a predetermined frequency to superimpose information for authentication and the like on the alternating power. The portable device obtains the frequency-modulated alternating power transmitted from the charger and receives the authentication information and the like by demodulating the frequency modulated alternating power.

In the device described in patent document 1, information for authentication and the like is superimposed on the alternating power transmitted from the charger to the portable device. Thus, there is no need to provide a separate communication device for communication between the charger and the portable device. This simplifies the configuration.

### PRIOR ART DOCUMENT

Patent Document 1: Japanese Laid-Open Patent Publication No. 2008-295191

### SUMMARY OF THE INVENTION

### PROBLEM TO BE SOLVED BY THE INVENTION

Although the configuration is simplified, in addition to a power conversion circuit, dedicated circuits for performing frequency modulation and demodulation are required to perform communication between the charger and the portable device. This limits simplification of the configuration. Thus, there is still room for improvement when simplifying the configuration of the non-contact power transmission device.

Accordingly, it is an object of the present invention to provide a non-contact power transmission device that transmits information between a primary coil and a secondary coil with a simpler configuration when performing power transmission in a non-contact manner.

### MEANS FOR SOLVING THE PROBLEM

A first aspect of the present invention is a non-contact power transmission device. The device is provided with a resonance circuit including a switching element and a primary coil electrically connected to the switching element. The resonance circuit induces alternating power with the primary coil in correspondence with a resistance of the resonance circuit by performing a switching operation with the switching element. A secondary coil receives the alternating power from the primary coil in a non-contact manner at a position intersecting an alternating magnetic flux generated by the primary coil. A primary side controller ON/OFF controls the switching element so that the alternating power is induced at the primary coil, and changes the resistance of the resonance circuit based on information that is to be transmitted to the secondary coil to modulate an amplitude of the alternating power induced at the primary coil. A secondary side controller demodulates the information transmitted to the secondary coil from a change in the amplitude of the alternating power received by the secondary coil in accordance with a change in the amplitude of the alternating power at the primary coil.

In this configuration, when the resistance of the resonance circuit changes, the switching operation of the switching element also changes the amplitude of the alternating power induced at the primary coil. Thus, the resistance of the resonance circuit is changed in accordance with the information that is to be transmitted to the secondary coil. This induces alternating power having an amplitude that changes in accordance with the information. That is, the induction of the alternating power and the amplitude modulation of the power (voltage) are performed at the same time. Thus, by demodulating a change in the amplitude of the alternating power induced at the secondary coil as information transmitted from the primary coil, when transmitting power in a non-contact manner, information can be transmitted between the primary coil and the secondary coil with a simpler configuration. Further, control executed by the primary side and secondary side controllers in relation with the transmission of alternating power and the transmission of information can be facilitated.

A second aspect of the present invention is a power transmission circuit that transmits power induced by a primary coil to a secondary coil in a non-contact manner. The power transmission circuit includes a resonance circuit including a switching element and the primary coil, which is electrically connected to the switching element. The resonance circuit induces alternating power with the primary coil in correspondence with a resistance of the resonance circuit by performing a switching operation with the switching element. A primary side controller ON/OFF controls the switching element so that the alternating power is induced at the primary coil, and changes the resistance of the resonance circuit based on information that is to be transmitted to the secondary coil to modulate an amplitude of the alternating power induced at the primary coil. This configuration provides a power transmission circuit that is suitable for the non-contact power transmission device of the first aspect.

### BRIEF DESCRIPTION OF THE DRAWINGS

Fig. 1 is a circuit block diagram showing the configuration of a first embodiment of a non-contact power transmission device according to the present invention.
Fig. 2(a) is a timing chart showing an example of transition of alternating power (voltage) induced by a primary coil in the non-contact power transmission device of Fig. 1, Fig. 2(b) is a timing chart showing an example of transition of an alternating power (voltage) induced by a secondary coil, and Fig. 2(c) is a timing chart showing an example of transition of a DC voltage in which voltage induced by the secondary coil is full-wave-rectified and retrieved in the secondary side controller.
Fig. 3 is a block diagram showing the configuration of a second embodiment of a non-contact power transmission device according to the present invention.
Fig. 4 is a graph showing an example of on-resistance characteristics in a switching element (FET: Field Effect Transistor) that forms the non-contact power transmission device of Fig. 3.

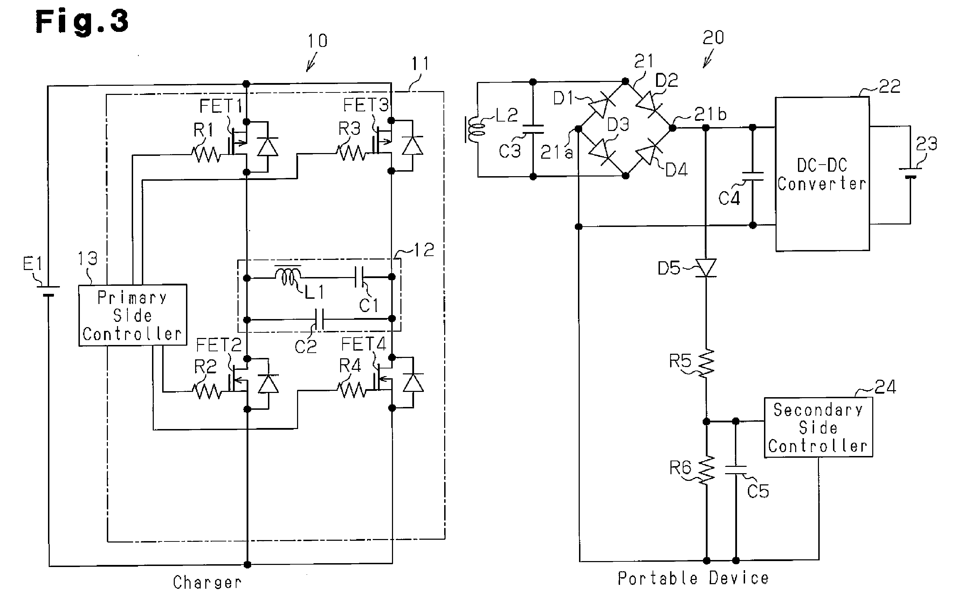

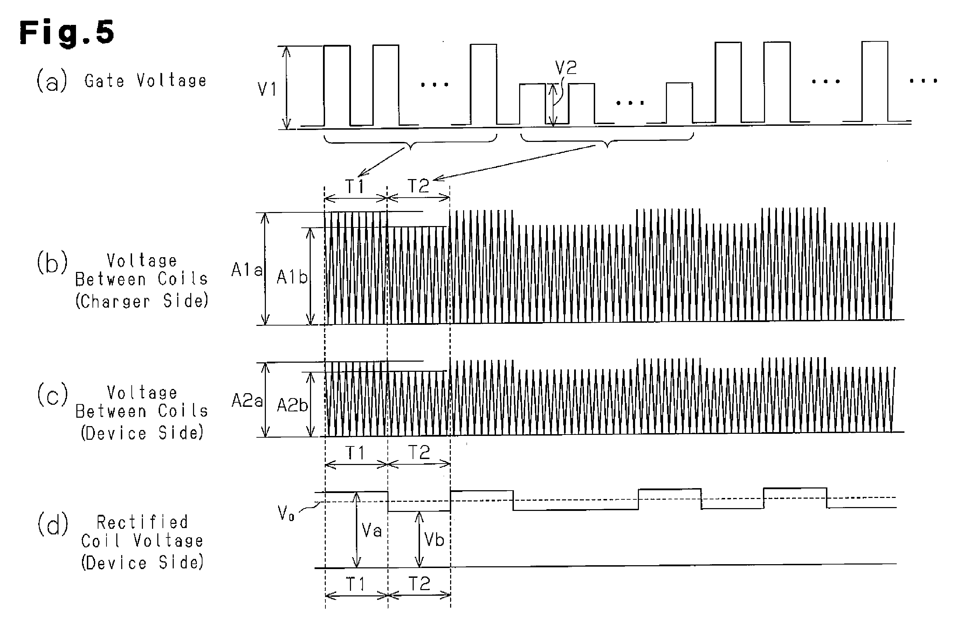

Fig. 5(a) is a timing chart showing an example of transition of the control voltage (gate voltage) applied to a control voltage (gate voltage) of the switching element in the non-contact power transmission device of Fig. 3, Fig. 5(b) is a timing chart showing an example of transition of alternating power (voltage) induced by the primary coil, Fig. 5(c) is a timing chart showing an example of transition of alternating power (voltage) induced by the secondary coil, and Fig. 5(d) is a timing chart showing an example of transition of the DC voltage in which the voltage induced by the secondary coil is full-wave-rectified and retrieved in the secondary side controller.
Fig. 6 is a sequence chart showing one example of the procedures for transmitting information and the procedures for transmitting power with a modified non-contact power transmission device.
Fig. 7(a) is a circuit block diagram showing a power transmission circuit in a non-contact power transmission device including a variable resistor circuit used to change the on-resistance of a switching element, and Figs. 7(b) and 7(c) are circuit diagrams showing examples of the configuration of the variable resistor circuit.

### EMBODIEMNTS OF THE INVENTION

### [First Embodiment]

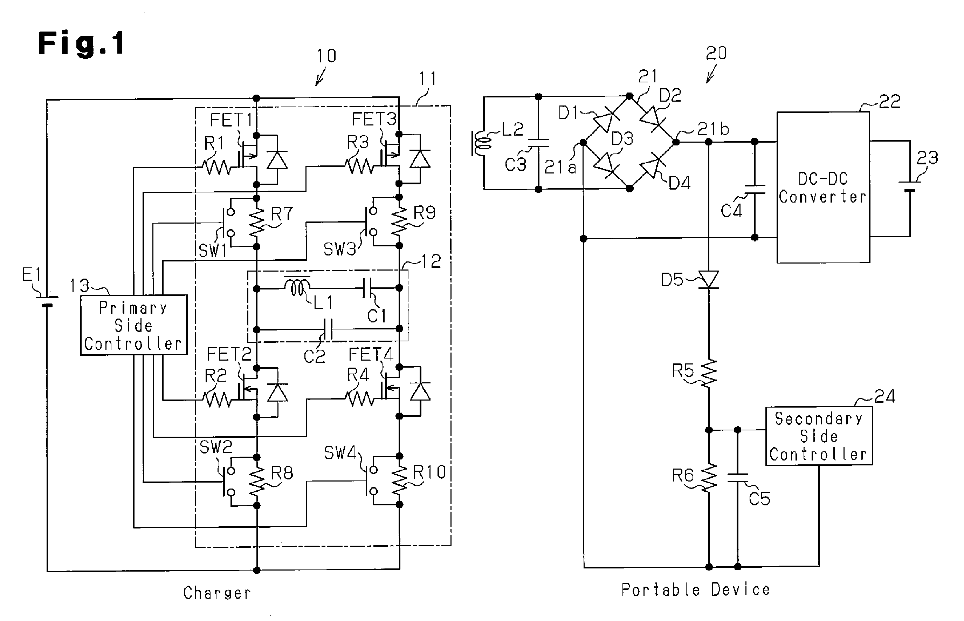

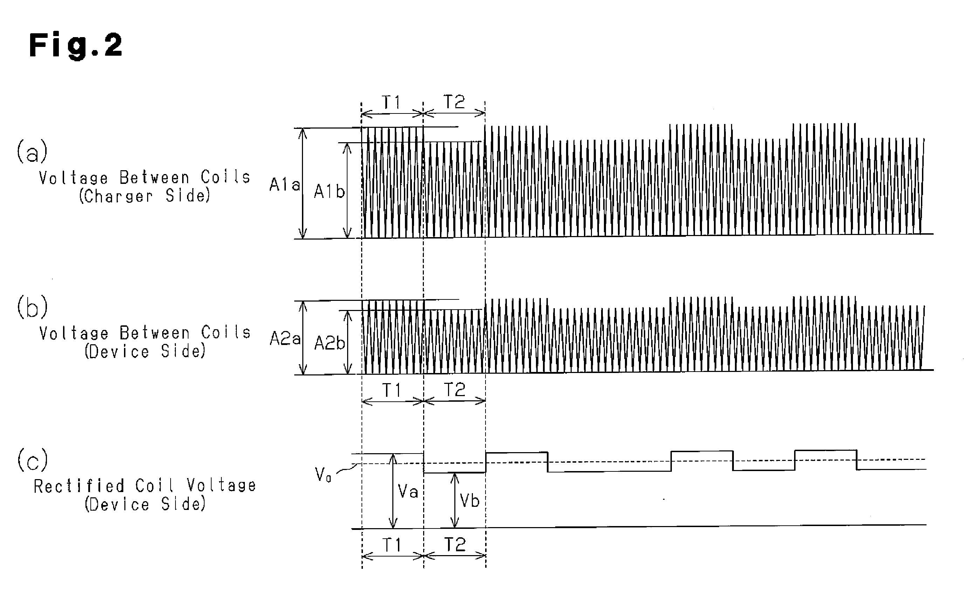

A first embodiment of a non-contact power transmission device according to the present invention will now be described with reference to Figs. 1 and 2. The device of this embodiment includes a portable device, such as a digital camera, a shaver, and a notebook computer, that includes a rechargeable battery, which serves as a power supply (load), and a charger, which supplies power to the rechargeable battery of the portable device in a non-contact manner.

First, as shown in Fig. 1, in the non-contact power transmission device, a full-bridge complex resonance circuit 10, which serves as a circuit for generating an alternating power, is mounted on the charger. In such a full-bridge complex resonance circuit 10, a resonance circuit 12 (resonance unit) including a primary coil L1, to which the alternating power is supplied, is connected to a midpoint position of a full-bridge circuit 11 by switching elements FET1 to FET4, which are formed by field effect transistors. The portable device includes a secondary side circuit 20 that receives the alternating power induced at the primary coil L1 by the full-bridge complex resonance circuit 10 through the secondary coil L2, converts the received alternating power to DC power, and supplies the power to a rechargeable battery 23, which is a power supply and a load.

In the full-bridge complex resonance circuit 10 of the charger, a primary side controller 13, which is formed by a microcomputer, applies control voltage (gate voltage) to the switching elements FET1 to FET4 via gate resistors R1 to R4 to perform ON/OFF control of the switching elements FET1 to FET4. More specifically, in the full-bridge circuit 11 illustrated in Fig. 1, the switching elements FET1 and FET4 and the switching elements FET2 and FET3 are alternately turned ON/OFF in accordance with the gate voltage so that the DC power constantly supplied from a power supply E1 induces alternating power at the primary coil L1 of the resonance circuit 12. In other words, the resonance circuit 10 and the primary side controller 13 are used as a power transmission circuits that transmit the power induced by the primary coil L1 to the secondary coil L2 in a non-contact manner. Here, it is assumed that an oscillating frequency of the alternating power oscillated by the resonance circuit 12 is about 100 to 200 kHz, and a duty ratio, which is the ratio of the ON/OFF time of the switching elements FET1 to FET4 is set to about "95%".

Alternating magnetic flux generated from the primary coil L1 by such oscillation intersects the secondary coil L2 at the portable device side so that the alternating power induced by the primary coil L1 is received by the secondary coil L2 and the power generated by the charger is transmitted to the portable device through the secondary coil L2. In the resonance circuit 12, a capacitor C1 connected in series to the primary coil L1 performs zero current switching and reduces switching loss when the switching elements FET1 to FET4 are turned off. A capacitor C2, which is connected in parallel to the primary coil L1, performs zero voltage switching and reduces the switching loss when the switching elements FET1 to FET4 are turned on.

In the first embodiment, a parallel circuit including resistor elements R7 to R10, which have predetermined resistances, and switches SW1 to SW4 are electrically inserted between the primary coil L1 and each of the switching elements FET1 to FET4. In the first embodiment, the open and close state of each of the switches SW1 to SW4 is controlled by the primary side controller 13 based on the information transmitted from the charger to the portable device to change the resistance of the full-bridge complex resonance circuit 10, which includes the resonance circuit 12. More specifically, when the primary side controller 13 performs open/close control and opens each of the switches SW1 to SW4, the resistor elements R7 to R10 are electrically interposed between the primary coil L1 and each of the switching elements FET1 to FET4. This increases the resistance of the full-bridge complex resonance circuit 10. This lowers the voltage induced by the primary coil L1 through the switching elements FET1 to FET4 and lowers the amplitude of the alternating power (voltage) induced by the primary coil L1. In contrast, when each of the switches SW1 to SW4 is closed, each of the resistor elements R7 to R10 electrically interposed between the primary coil L1 and each of the switching elements FET1 to FET4 is bypassed (non-interposed), and the amplitude of the alternating power (voltage) induced by the primary coil L1 is also maintained at the intended high state. In other words, the alternating power (voltage) induced by the primary coil L1 is amplitude-modulated by the open/close control of each of the switches SW1 to SW4.

A capacitor C3, which performs impedance matching of the full-bridge complex resonance circuit 10 and the secondary side circuit 20, is connected in parallel to the secondary coil L2 in the secondary side circuit 20, which receives the alternating power through the secondary coil L2. The alternating power received by the secondary coil L2 is input via the capacitor C3 to a full-wave rectifier circuit 21, which is formed by diodes D1 to D4, and converted to DC power when undergoing full-wave rectification in the full-wave rectifier circuit 21. A smoothening capacitor C4 and a DC-DC converter 22, which increases the DC power (voltage) converted by the full-wave rectifier circuit 21, are connected in parallel to output terminals 21a and 21 b of the full-wave rectifier circuit 21. The increased power (voltage) is supplied (charged) to the rechargeable battery 23, which serves as the load.

The DC power (voltage) that undergoes full-wave rectification in the full-wave rectifier circuit 21 is also retrieved in a secondary side controller 24, which is formed by a microcomputer, sequentially through a diode D5, resistor elements R5 and R6, and a capacitor C5. The secondary side controller 24 is a portion that monitors changes in the level of the full-wave-rectified DC voltage, that is, changes in the modulated amplitude, and demodulates information, for example, a charger ID of eight bits, transmitted from the charger side to the portable device side.

When the non-contact power transmission devices is configured in such manner, electromagnetic coupling of the primary coil L1 and the secondary coil L2 transmits the alternating power generated by the charger to the portable device in a non-contact manner. When charging the rechargeable battery 23, which is the subject supplied with power, it is desirable that authentication information, which is used to determine whether or not the specification of the portable device including the rechargeable battery 23 conforms to the specification of the charger, be transferable between the charger and the portable device. In the first embodiment, the amplitude of the alternating power induced at the primary coil L1 is modulated by changes in the resistance of the full-bridge complex resonance circuit 10 and then demodulated by the secondary side controller 24 to enable the transmission of information between the charger and the portable device.

A mode for modulating the amplitude of the alternating power with the primary side controller 13 will now be described with reference to Fig. 2. In Fig. 2, Fig. 2(a) shows an example of transition of the alternating power induced by the primary coil L1, and Fig. 2(b) shows an example of transition of the alternating power induced by the secondary coil L2. Fig. 2(c) shows a transition of a voltage value of the DC power retrieved by the secondary side controller 24.

As shown in Fig. 2(a), the alternating power induced by the primary coil L1 undergoes transition within amplitude A1 a when the resistor elements R7 to R10 are bypassed (non-interposed) by the switching of the switches SW1 to SW4 (period T1 in Fig. 2(a)). As shown in Fig. 2(b), an alternating power having amplitude A2a is induced by the secondary coil L2 in accordance with the amplitude A1a of the alternating power induced by the primary coil L1 (period T1 in Fig. 2(b)). Thus, as shown in Fig. 2(c), the voltage of the DC power induced by the secondary coil L2 and full-wave-rectified by the full-wave rectifier circuit 21 becomes voltage Va (period T1 in Fig. 2(c)). The secondary side controller 24, which retrieves the DC power, determines whether the information transmitted from the charger is logical level "H" or logical level "L" based on the determination on whether or not the voltage Va exceeds a threshold value V₀ for distinguishing interposition and non-interposition (bypassing) of the resistance of each resistor element R7 to R10. In period T1, the information transmitted from the primary side controller 13 is determined as being logical level "H".

When each of the resistor elements R7 to R10 is interposed by the switching of each of the switches SW1 to SW4, as shown in Fig. 2(a), the amplitude of the alternating power induced by the primary coil L1 is lowered from the amplitude A1a to amplitude A1b as the current flowing to the resonance circuit 12 decreases (reduction in applied voltage) (period T2 of Fig. 2(a)). Further, as shown in Fig. 2(b), the amplitude of the alternating power induced by the secondary coil L2 in this case also lowers the amplitude A2a to amplitude A2b as the amplitude of the alternating power induced by the primary coil L1 decreases (period T2 of Fig. 2(b)). Thus, the voltage of the DC power retrieved by the secondary side controller 24 also decreases from voltage Va to voltage Vb (period T2 of Fig. 2(c)). The voltage Vb is lower than the threshold value V₀. Thus, the secondary side controller 24 determines that the information transmitted from the primary side controller 13 during period T2 is logical level "L".

In this manner, in the first embodiment, each of the switches SW1 to SW4 switches the interposition/non-interposition (bypass) of each of the resistor elements R7 to R10 to change the resistance of the full-bridge complex resonance circuit 10. This modulates the amplitude of the alternating voltage induced by the primary coil L1 and the secondary coil L2 and transmits the information by demodulating the modulated amplitude with the secondary side controller 24. In the first embodiment, the information transmitted from the primary coil L1 to the secondary coil L2 is modulated to information of eight bits, for example, by the modulation of the amplitude of the alternating power when changing the resistance. Thus, the power transmission when turning ON and OFF each of the switching elements FET1 to FET4 and the modulation and demodulation of the amplitude can be simultaneously performed, and the configuration of the non-contact power transmission device can be further simplified.

As described above, the non-contact power transmission device according to the first embodiment has the following effects.
(1) The transmission of information from the primary coil L1 to the secondary coil L2 is performed based on changes in the amplitude of the alternating power induced by each of the primary coil L1 and the secondary coil L2 that changes in accordance with changes in the resistance of the full-bridge complex resonance circuit 10. Thus, when transmitting information from the primary coil L1 to the secondary coil L2, the power transmission performed by the ON/OFF control of each of the switching elements FET1 to FET4 is performed at the same time as the transmission of information from the primary coil L1 to the secondary coil L2. Thus, when performing power transmission in a non-contact manner, the transmission of information between the primary coil L1 and the secondary coil L2 is performed with a further simple configuration, and the control for the transmission of alternating power and the transmission of information is facilitated.
(2) The resonance circuit arranged in the charger includes the full-bridge complex resonance circuit 10, in which the resonance circuit 12 including the primary coil L1 is connected to a midpoint position of the full-bridge circuit 11 formed by the four switching elements FET1 to FET4. This increases, in a preferable manner, the transmission efficiency of the alternating power generated by the ON/OFF control of the switching elements FET1 to FET4 forming the full-bridge circuit 11.
(3) The resistance of the full-bridge complex resonance circuit 10 including the resonance circuit 12 is changed by the open/close control performed by the switches SW1 to SW4, which switching interposed/non-interposed (bypassed) states of the resistor elements R7 to R10 electrically interposed between the resonance circuit 12, which includes the primary coil L1, and each of the switching elements FET1 to FET4 of the full-bridge circuit 11. This changes the resistance of the full-bridge complex resonance circuit 10 with a higher degree of freedom, and the modulation of the amplitude of the alternating power resulting from such change in resistance is performed with a higher degree of freedom.
(4) The switching elements FET1 to FET4 are formed by field effect transistors. This further easily realizes the generation of the alternating power, which is performed with the ON/OFF control of the switching elements FET1 to FET4, and the modulation of the amplitude. It is apparent that the switches SW1 to SW4 may be realized with a switching element such as a field effect transistor.

### [Second Embodiment]

A second embodiment of a non-contact power transmission device according to the present invention will now be described with reference to Figs. 3 to 5. The second embodiment changes the resistance of the full-bridge complex resonance circuit 10 by changing the resistance (value of on-resistance) between two current terminals of the transistor element that is in a conductive state when each of the switching elements FET1 to FET4 is turned ON, and the basic configuration is the same as that of the first embodiment. Such elements will not be described again.

Fig. 3 shows the schematic configuration of the non-contact power transmission device of the second embodiment in correspondence with Fig. 1.

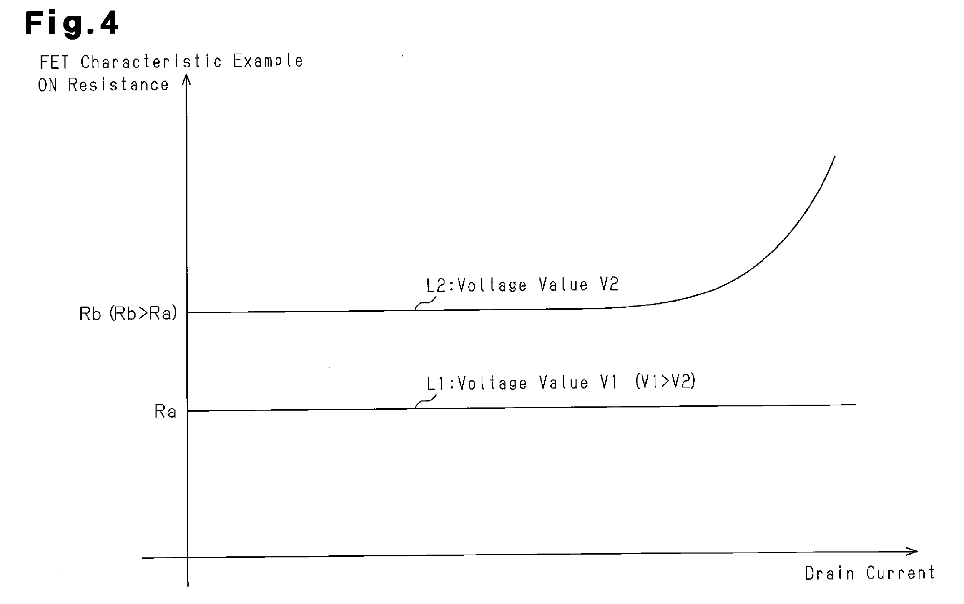

As shown in Fig. 3, the switches SW1 to SW4 and the resistor elements R1 to R10 are omitted from the non-contact power transmission device of the second embodiment. The voltage value of the gate voltage serving as the control voltage applied to each of the switching elements FET1 to FET4 is adjusted by the primary side controller 13 based on the information transmitted from the charger side to the portable device side. This changes the values of the on-resistances of the switching elements and changes the resistance of the full-bridge complex resonance circuit 10. Fig. 4 shows an example of the characteristics of the on-resistance of each of the switching element FET1 to FET4.

As shown by solid line L1 in Fig. 4, the on-resistance of the switching elements FET1 to FET4 is held at resistance Ra when the voltage value of the gate voltage applied to the switching elements FET1 to FET4 is, for example, voltage V1. As shown by the solid line L2 in Fig. 4, the on-resistance of the switching elements FET1 to FET4 increases from resistance Ra to resistance Rb (Rb > Ra) when the voltage value of the gate voltage applied to the switching elements FET1 to FET4 decreases from voltage V1 to voltage V2 (V2 < V1).

In the second embodiment, in view of the above characteristics of the switching elements FET1 to FET4, the amplitude modulation of the alternating power induced by the primary coil L1 is performed by adjusting the voltage value of the gate voltage output by the primary side controller 13, that is, by changing the on-resistance of the switching elements FET1 to FET4.

A mode for transmitting information with the non-contact power transmission device of the second embodiment will now be described with reference to Fig. 5. In Fig. 5, Fig. 5(a) shows a transition example of the gate voltage (control voltage) applied to the control voltage (gate voltage) of the switching element FET1 to FET4 (time axis enlarged for the sake of convenience). Further, Fig. 5(b) shows a transition example of the alternating power induced by the primary coil L1, Fig. 5(c) shows a transition example of the alternating power induced by the secondary coil L2, and Fig. 5(d) shows a transition example of the voltage value of the DC power retrieved by the secondary side controller 24.

As shown in Fig. 5(a), when a gate voltage having voltage value V1 is applied to each of the switching elements FET1 to FET4 based on the characteristics shown in Fig. 4, the on-resistance of each of the switching elements FET1 to FET4 becomes resistance Ra. Thus, as shown in period T1 in Fig. 5(b), the alternating power induced by the primary coil L1 undergoes transition within amplitude A1a. As shown in Fig. 5(c), the alternating power having amplitude A2a is induced in the secondary coil L2 in accordance with the amplitude A1a of the alternating power induced by the primary coil L1 (period T1 of Fig. 5(c)). As shown in Fig. 5(d), this retrieves the DC power of voltage Va in the secondary side controller 24 (period T1 of Fig. 5(d)). The secondary side controller 24 compares the voltage Va of the DC power and the threshold value V₀ for distinguishing whether the voltage value of the gate voltage obtained with the primary side controller 13 is the voltage V1 or the voltage V2. Further, the secondary side controller determines whether the information transmitted from the charger is logical level "H" or logical level "L" based on the determination on whether or not the voltage Va exceeds the threshold value V₀. In other words, the information transmitted from the primary side controller 13 is determined as being logical level "H" in period T1.

When the value of the gate voltage applied to each of the switching elements FET1 to FET4 is lowered from the voltage V1 to the voltage V2 by the adjustment of the gate voltage (control voltage) with the primary side controller 13, the on-resistance of the switching elements FET1 to FET4 changes accordingly and increases from resistance Ra to resistance Rb (Fig. 4). Thus, as shown in Fig. 5(b), as the on-resistance of each of the switching elements FET1 to FET4 increases, the amplitude of the alternating power induced by the primary coil L1 decreases from amplitude A1a to amplitude A1b (period T2 in Fig. 5(b)). Further, as shown in Fig. 5(c), the amplitude of the alternating power induced at the secondary coil L2 also decreases from amplitude A2a to amplitude A2b as the alternating power induced by the primary coil L1 decreases (period T2 in Fig. 5(c)). This decreases the voltage value of the DC power retrieved by the secondary side controller 24 from voltage Va to voltage Vb. Since the voltage Vb is lower than the threshold value V₀, the secondary side controller 24 determines that the information transmitted from the primary side controller 13 is logical level "L" in period T2.

In this manner, in the second embodiment, the amplitude of the alternating power induced by the primary coil L1 is modulated by changing the on-resistance of each of the switching elements FET1 to FET4 by adjusting the voltage value of the gate voltage applied to each of the switching elements FET1 to FET4. That is, the transmission of information from the primary coil L1 to the secondary coil L2 is performed by changing the voltage value of the gate voltage applied to each of the switching elements FET1 to FET4 by the primary side controller 13. This simultaneously performs power transmission with the ON/OFF of the switching elements FET1 to FET4 and the modulation/demodulation of the amplitude, and the configuration of the non-contact power transmission device is simplified.

As described above, the non-contact power transmission device in the second embodiment also obtains advantages (1), (2), and (4) of the first embodiment. Further, the advantage described below is obtained in lieu of advantage (3).

(3A) The resistance of the full-bridge complex resonance circuit 10 is changed by changing the on-resistance of each of the switching elements FET1 to FET4. This allows the resistance of the full-bridge complex resonance circuit 10 to be changed in a mode utilizing the characteristics of the switching elements FET1 to FET4. Further, the on-resistance of each of the switching elements FET1 to FET4 is changed by changing the voltage value of the gate voltage, which is the control voltage. Thus, the amplitude modulation of the alternating power performed by changing the resistance of the full-bridge complex resonance circuit 10 is realized with a further simplified configuration.

### [Other Embodiments]

The above embodiments may be modified as described below.

In each of the above embodiments, information, such as the charger ID, is transmitted from the charger to the portable device, that is, from the primary coil L1 to the secondary coil L2. However, in the device illustrated in Fig. 1 or Fig. 3,
(a) the portable device may further include a circuit capable of modulating the amplitude of the alternating power (voltage) induced at the secondary coil L2 based on a command from the secondary side controller 24; and
(b) the charger may further include a circuit that extracts changes in the amplitude (modulated amplitude) of the alternating power (voltage) at the secondary coil L2, and the primary side controller 13 may function to demodulate the information modulated at the portable device side from the extracted change in the amplitude of the alternating power (voltage).

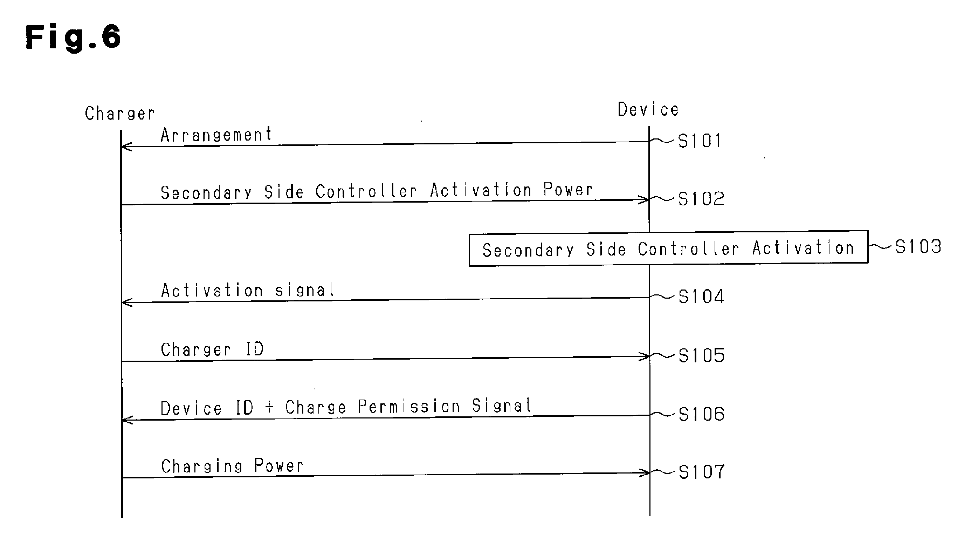

By expanding functions in such a manner, the charger and the portable device may have mutual communication functions as shown in Fig. 6.

As shown in Fig. 6, when the portable device is arranged on the charger in step S101, power for activating the secondary side controller 24 is transmitted to the secondary side circuit 20 by the electromagnetic coupling of the primary coil L1 and the secondary coil L2 (step S102).

In this manner, by supplying the secondary side controller 24 with the power transmitted to the secondary side circuit 20, the secondary side controller 24 is activated (step S103). The activated secondary side controller 24 performs modulation with the secondary coil L2 to transmit an activation signal, which indicates activation of the secondary side controller 24, to the primary side controller 13.

The primary side controller 13 extracts the modulated activation signal as a change in the amplitude of the alternating power (voltage) induced at the primary coil L1. Further, the primary side controller 13 demodulates the extracted activation signal. In this manner, the activation signal serving as the information from the portable device to the charger is performed (step S104).

When receiving the activation signal from the secondary side controller 24 (portable device), the primary side controller 13 (charger) transmits the information indicating the charger ID of, for example, 8 bits, which is the authentication information showing the specification or the like of the charger, from the charger to the portable device as a change in the amplitude of the alternating power induced by the primary coil L1 (step S105).

When the information indicating the charger ID is transmitted to the portable device, the secondary side controller 24 demodulates the information. When determining through the demodulation that the specification or the like of the charger is in conformance with the specification or the like of the portable device, for example, the information indicating the portable device ID of 8 bits and information indicating charging permission of the portable device (charger permission signal) are transmitted from the portable device to the charger device by modulation with the secondary coil L2 (step S106).

In this manner, the primary side controller 13 determines that the portable device arranged on the charger is in conformance with the specification of the charger and supplies power to the rechargeable battery 23 (step S107). This accurately transmits power between the primary coil L1 and the secondary coil L2 based on the transmission of information between the coils L1 and L2. Further, the charging of the rechargeable battery with power is performed with high reliability.

In each of the embodiments and modifications (expanded examples) described above, the information of 8 bits is used as the information transmitted between the primary coil L1 and the secondary coil L2. However, information of any number of bits may be used. For example, information of 4 bits or 16 bits may be used.

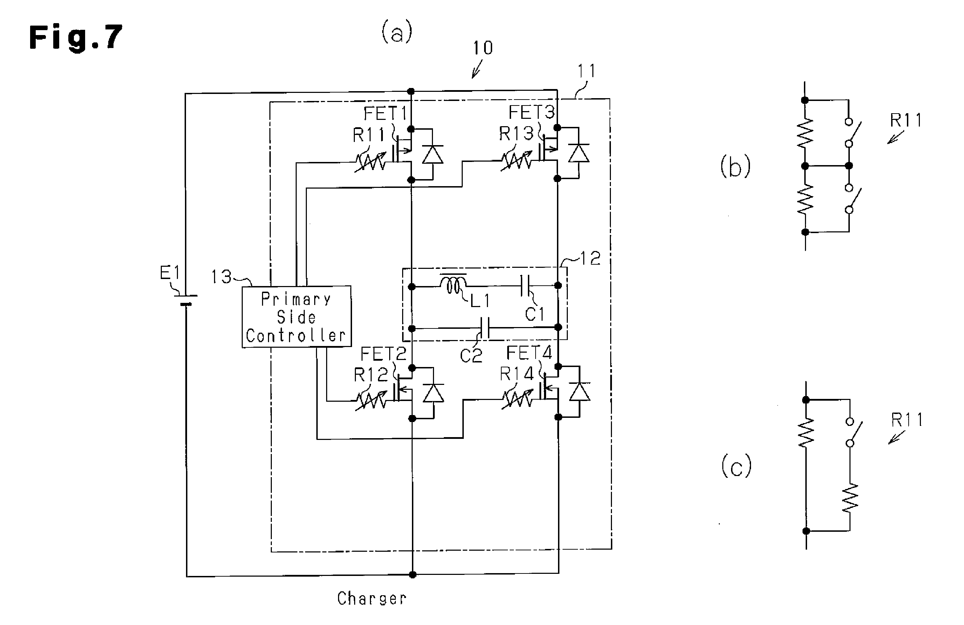

In the second embodiment, the on-resistance of each of the switching elements FET1 to FET4 is changed by adjusting the voltage value of the control voltage output by the primary side controller 13. However, the present invention is not limited in such a manner, and variable resistor circuits R11 to R14 may be inserted between the primary side controller 13 and the control voltage application terminal (gate terminal) of each of the switching elements FET1 to FET4, as shown in Fig. 7(a). As shown in Figs. 7(b) and 7(c), each of the variable resistor circuits R11 to R14 (only the configuration of variable resistor circuit R11 is shown here) includes a plurality of resistor elements, which are connected in series or in parallel, and one or more switches, which can vary the combined resistance of the resistor elements. The primary side controller 13 may change the voltage value of the control voltage (gate voltage) applied to each of the switching elements FET1 to FET4 by controlling the opening and closing of the switch of each of the variable resistor circuits R11 to R14. This allows for changes in the on-resistance by changing the voltage value of the control voltage of the switching element. Further, the resistance of the full-bridge complex resonance circuit can be changed with a higher degree of freedom.

In each of the embodiments and modifications (expanded examples) described above, field effect transistors are used as the switching elements FET1 to FET4. In addition, various types of power transistors may be used as switching elements forming the circuit that generates alternating power.

In each of the embodiments and modifications (expanded examples) described above, the resonance circuit is configured as the full-bridge complex resonance circuit 10, in which a resonance circuit including the primary coil L1 is connected to the midpoint position of the full-bridge circuit 11 by a switching element. However, the present invention is not limited in such a manner. The resonance circuit 10 may be another circuit configuration including a switching element and the primary coil L1 electrically connected to the switching element. For example, the resonance circuit 10 may induce the alternating power with the primary coil L1 by using a single switching element in place of the full-bridge circuit 11.

In each of the embodiments and modifications (expanded examples) described above, the resonance circuit, which includes the primary coil L1, and the primary side controller 13 are mounted on the charger, and the secondary coil L2 and the secondary side controller 24 are mounted on the portable device. However, the subject on which the resonance circuit, which includes the primary coil L1, and the primary side controller 13 are mounted and the subject on which the secondary coil L2 and the secondary side controller 24 are mounted are not limited to the charger and the portable device. In other words, the present invention is applicable even in non-portable devices when various types of information is transmitted between the primary coil L1 and the secondary coil L2 through the modulation of the alternating power induced by the primary coil L1 and/or through the modulation of the alternating power induced by the secondary coil L2.

## Claims

1. A non-contact power transmission device comprising:
a resonance circuit including a switching element and a primary coil electrically connected to the switching element, wherein the resonance circuit induces alternating power with the primary coil in correspondence with a resistance of the resonance circuit by performing a switching operation with the switching element;
a secondary coil that receives the alternating power from the primary coil in a non-contact manner at a position intersecting an alternating magnetic flux generated by the primary coil;
a primary side controller that ON/OFF controls the switching element so that the alternating power is induced at the primary coil, and changes the resistance of the resonance circuit based on information that is to be transmitted to the secondary coil to modulate an amplitude of the alternating power induced at the primary coil; and
a secondary side controller that demodulates the information transmitted to the secondary coil from a change in the amplitude of the alternating power received by the secondary coil in accordance with a change in the amplitude of the alternating power at the primary coil.

2. The non-contact power transmission device according to claim 1, wherein:
the resonance circuit is a full-bridge complex resonance circuit including a full-bridge circuit, which is formed by a plurality of switching elements, and a resonance unit, which is electrically connected to a midpoint position of the full-bridge circuit and includes the primary coil; and
the primary side controller changes a resistance of the full-bridge complex resonance circuit to modulate the amplitude of the alternating power induced at the primary coil.

3. The non-contact power transmission device according to claim 2, further comprising a parallel circuit of a resistor element, which has a predetermined resistance, and a switch, the parallel circuit electrically being connected between the resonance unit including the primary coil and each of the switching elements of the full-bridge circuit, wherein
the primary side controller changes the resistance of the full-bridge complex resonance circuit by controlling opening and closing of each switch.

4. The non-contact power transmission device according to claim 2, wherein:
each of the switching elements of the full-bridge circuit is configured to have a variable on-resistance; and
the primary side controller changes the resistance of the full-bridge complex resonance circuit by changing a value of the on-resistance of each of the switching elements.

5. The non-contact power transmission device according to claim 4, wherein the primary side controller changes the value of the on-resistance of each of the switching elements by changing a voltage value of a control voltage applied to each of the switching elements.

6. The non-contact power transmission device according to claim 5, further comprising a variable resistor circuit inserted between the primary side controller and a control voltage application terminal of each of the switching elements, wherein:
the variable resistor circuit includes a plurality of resistor elements connected in series or in parallel and one or more switches for varying a combined resistance of the resistor elements; and
the primary side controller changes the voltage value of the control voltage applied to each of the switching elements by controlling opening and closing of the one or more switches of each variable resistor circuit.

7. The non-contact power transmission device according to any one of claims 1 to 6, wherein the switching element is formed by a field effect transistor.

8. The non-contact power transmission device according to any one of claims 1 to 7, wherein:
the resonance circuit, which includes the primary coil, and the primary side controller are arranged in a charger;
the secondary coil and the secondary side controller are arranged in a portable device, which includes a rechargeable battery; and
the rechargeable battery of the portable device is charged in a non-contact manner by the charger.

9. The non-contact power transmission device according to claim 8, wherein the secondary side controller determines whether or not a specification of the charger is in conformance with a specification of the portable device based on the demodulated information and permits charging of the rechargeable battery with the secondary coil as long as the specification of the charger is in conformance with the specification of the portable device.

10. A power transmission circuit that transmits power induced by a primary coil to a secondary coil in a non-contact manner, the power transmission circuit comprising:
a resonance circuit including a switching element and the primary coil, which is electrically connected to the switching element, wherein the resonance circuit induces alternating power with the primary coil in correspondence with a resistance of the resonance circuit by performing a switching operation with the switching element; and
a primary side controller that ON/OFF controls the switching element so that the alternating power is induced at the primary coil, and changes the resistance of the resonance circuit based on information that is to be transmitted to the secondary coil to modulate an amplitude of the alternating power induced at the primary coil.
